# EUROPEAN PATENT APPLICATION

(11) **EP 4 699 684 A2**
(43) Date of publication of application: **25.02.2026**
(21) Application number: 25191548.4
(22) Date of filing: 24.07.2025
(51) Int. Cl.: B01D 53/047, F25J 3/02, F25J 3/08

(54) **SYSTEM AND METHOD FOR SIMULTANEOUSLY PRODUCING HIGH-PURITY LIQUID NITROGEN AND HIGH-PURITY LIQUID CARBON DIOXIDE AT LOW COST BY USING FLUE GAS**

(30) Priority: 21.08.2024 CN 202411157890
(71) Applicant: Hangzhou Oxygen Plant Group Co., Ltd., Hangzhou, Zhejiang 310014 (CN)
(72) Inventor: Han, Yisong, Hangzhou, Zhejiang, 310014 (CN); Tan, Fang, Hangzhou, Zhejiang, 310014 (CN); Jiang, Yunyun, Hangzhou, Zhejiang, 310014 (CN)
(74) Representative: Grünecker Patent- und Rechtsanwälte PartG mbB

(57) **Abstract**

The present application belongs to the field of environmental protection, and in particular to a system and method for simultaneously producing high-purity liquid nitrogen and high-purity liquid carbon dioxide at low cost by using flue gas. The system provided by the present application comprises a flue gas boosting and cooling system, a CO₂/N₂ front-end separation system, a liquid CO₂ preparation system and a high-purity liquid nitrogen preparation system; where the flue gas boosting and cooling system is used to pressurize, cool, dewater and wash raw flue gas; the CO₂/N₂ front-end separation system uses pressure swing adsorption technology to adsorb/desorb CO₂ in the flue gas to obtain a CO₂ product gas; the liquid CO₂ preparation system is used to further purify and liquefy the desorbed CO₂ product gas to obtain a high-purity liquid CO₂ product; the high-purity liquid nitrogen preparation system is used to further purify and liquefy the exhaust gas of the pressure swing adsorption to obtain a high-purity liquid nitrogen product. The present application can maximize the use of flue gas to produce high-purity liquid nitrogen and liquid CO₂ at low cost, and realize the synchronous resource utilization of carbon/nitrogen components.

## Description

### FIELD

The present application relates to the field of environmental protection, and in particular to a system and method for simultaneously producing high-purity liquid nitrogen and high-purity liquid carbon dioxide at low cost by using flue gas.

### BACKGROUND

Carbon dioxide is a major greenhouse gas that affects global warming, and reducing carbon dioxide emissions has become the most pressing environmental issue in the world. With the development of steel and coal chemical industries of China, various combustion devices have been used more and more widely. Since the development of new energy sources such as solar energy, wind energy, and hydrogen energy has not yet reached a level of large-scale application, the combustion devices in various industries are still based on carbon-containing energy such as coal and petroleum. The flue gas produced by combustion is mainly composed of nitrogen, carbon dioxide, oxygen, water vapor, and sulfide after desulfurization, denitrification, and dust removal. The CO₂ content is 10% to 20%, and the N₂ content is above 70%. Flue gas has characteristics of low pressure, large amount, water content, and low CO₂ content, which increases the difficulty of carbon dioxide recovery. The main technologies for separating and recovering CO₂ include absorption technology, adsorption technology, membrane separation technology, and low-temperature phase change separation technology, etc. Chemical absorption method is the most mature CO₂ capture method and has been worldwide applied in many flue gases carbon capture engineering projects. However, it is not easy to regenerate, and chemical absorbents have certain toxicity and corrosiveness, which have a great impact on the environment. Membrane separation method uses a thin film made of polymer materials to separate gases based on the difference in the permeability of different gases, and this technology is more limited in large-scale applications. Pressure swing adsorption technology has many advantages, such as easy regeneration of adsorbents, long service life of adsorbents, and simple equipment. However, for flue gas with low concentration of carbon dioxide, the cost and energy consumption of conventional pressure swing adsorption technology are very high, which is the main reason for the limited application of this technology.

With the rapid development of industry, nitrogen has been widely used in chemical, electronic, metallurgical, food, machinery and other fields. In the production process of electronic components and semiconductor components, nitrogen with a purity of more than 99.999% is usually required as a protective gas. At present, China has applied high-purity nitrogen as a carrier gas and protective gas to production processes of color TV picture tubes, large-scale integrated circuits, liquid crystals and semiconductor silicon wafers. The N₂ content in the flue gas is relatively high, especially after the CO₂ in the flue gas is captured, the N₂ concentration can reach more than 90%. Many patents have disclosed the recovery and utilization of N₂ in flue gas. CN210825439U discloses a system for synchronously recovering carbon dioxide and nitrogen from flue gas of coal-fired power plants, which uses multi-stage PSA technology to synchronously recover CO₂ and N₂ to obtain liquid CO₂ products and high-purity nitrogen. CN115364618A discloses a method for separation and comprehensive utilization of flue gas, which uses the separation and purification technology of the pressure swing adsorption gas, by combination of pressure swing adsorption and chemical reaction to produce nano calcium carbonate, so as to solve the recovery and utilization problem of nitrogen and carbon dioxide in the flue gas, so that the utilization rate of carbon dioxide in the flue gas is ≥99%, and nano calcium carbonate and nitrogen are co-produced at the same time.

However, in all the above patents, after separating CO₂ and N₂ in the flue gas, pressure swing adsorption is used to purify nitrogen. Due to the gaseous properties of nitrogen, its application scenarios are limited based on the needs of the downstream industrial chain surrounding the project.

### SUMMARY

In view of the above, a purpose of the present application is to provide a system and method for simultaneously producing high-purity liquid nitrogen and high-purity liquid carbon dioxide at low cost by using flue gas. The system and method provided by the present application utilize the pressure swing adsorption technology and low-temperature separation technology, and integrate the energy level matching and transfer utilization of heating capacity and cooling capacity, to realize the liquefying and recycling of CO₂ and N₂ in flue gas. The liquid nitrogen, as a liquid medium, has good storage and transportation characteristics and a wide range of applications. The nitrogen content in the exhaust gas after capturing the carbon in flue gas reaches more than 90%, and the energy consumption of liquid nitrogen preparation is lower than that of conventional air separation. Therefore, the system and method have high economic and social value, and provide a very effective solution to the problems of high energy consumption of low-concentration CO₂ capture and the resource utilization of N₂ in the flue gas.

The present application provides a system for simultaneously producing high-purity liquid nitrogen and high-purity liquid carbon dioxide at low cost by using flue gas, comprising: a flue gas boosting and cooling system, a CO₂/N₂ front-end separation system, a liquid CO₂ preparation system and a high-purity liquid nitrogen preparation system;
where the flue gas boosting and cooling system comprises a flue gas booster (1), a flue gas cooling tower (2), a water cooling tower (3), a low-temperature water pump (4) and a chiller unit (5), configured to pressurize, cool, dewater and wash raw flue gas;
the CO₂/N₂ front-end separation system is configured to separate CO₂ by using a pressure swing adsorption method, and comprises a plurality of pressure swing adsorption towers (13, 14), a switching flow path and a valve, a vacuum pump (15), a CO₂ buffer device (16) and an adsorption tail gas buffer device (19); when the system is in operation, the plurality of pressure swing adsorption towers (13, 14) are configured to adsorb CO₂ in the flue gas, and then the vacuum pump (15) depressurizes to desorb and obtain a CO₂ product gas;
the liquid CO₂ preparation system comprises a CO₂ booster (20), a CO₂ purification tower (22), a CO₂ condenser (24), a CO₂ evaporator (23) and a CO₂ subcooler (46), configured to further purify and liquefy the desorbed CO₂ product gas to obtain a high-purity liquid CO₂ product;
the high-purity liquid nitrogen preparation system comprises a blower (47), a nitrogen booster (34), a nitrogen cooler (32), an expansion cooling system (31), a nitrogen liquefier (33), a gas-liquid separator (43) and a low-temperature separation system (42), configured to further purify and liquefy exhaust gas of the plurality of pressure swing adsorption towers (13, 14) to obtain a liquid nitrogen product;
when the system is in operation, compression heat generated by compressing CO₂ in the liquid CO₂ preparation system is used to assist the operation of the plurality of pressure swing adsorption towers (13, 14); a part of fluid produced by the nitrogen liquefier (33) of the high-purity liquid nitrogen preparation system is drawn out to be used as a cold source for the liquid CO₂ preparation system; dry exhaust gas produced by the high-purity liquid nitrogen preparation system is used in the water cooling tower (3) of the flue gas boosting and cooling system to recover cooling capacity;
the flue gas boosting and cooling system, the CO₂/N₂ front-end separation system, the liquid CO₂ preparation system and the high-purity liquid nitrogen preparation system, as well as various devices and equipments in each system, are connected through pipelines and valves.

In one embodiment, in the flue gas boosting and cooling system, the flue gas is pressurized to a required pressure by the flue gas booster (1), and the pressurized flue gas is sent to the flue gas cooling tower (2) for washing and cooling; the flue gas cooling tower (2) is structurally divided into two sections, and one part of ambient temperature circulating water is pumped into a middle and lower part of the flue gas cooling tower (2) through a first water valve (6), and another part of ambient temperature circulating water is pumped into the water cooling tower (3) through a second water valve (7); low-temperature water is pumped into an upper part of the flue gas cooling tower through a third water valve (8) and the low-temperature water pump (4), which is cooled by the dry nitrogen discharged from the high-purity liquid nitrogen preparation system and chiller unit (5). During the shutdown of the high-purity liquid nitrogen preparation system, a fourth water valve (9) is opened to cool the flue gas by circulating the low-temperature water in the upper part; a fifth water valve is a water supply valve (10), and a sixth water valve (11) is a drain valve.

In one embodiment, in the CO₂/N₂ front-end separation system, inlets of the plurality of pressure swing adsorption towers (13, 14) are connected to the flue gas treated by the flue gas cooling tower (2) through a first gas valve (12) to continuously adsorb and capture CO₂ in the flue gas; an inlet of the vacuum pump (15) is connected to the plurality of pressure swing adsorption towers (13, 14), and after the adsorption is completed, the vacuum pump (15) is used to desorb and regenerate the pressure swing adsorption towers that have been saturated with adsorption; an outlet of the vacuum pump (15) is connected to the CO₂ buffer device (16), and desorbed gas is sent to the CO₂ buffer device (16); a gas that is not adsorbed by the plurality of pressure swing adsorption towers (13, 14) is sent to the adsorption tail gas buffer device (19) through a second gas valve (18) as an adsorption tail gas.

In one embodiment, in the liquid CO₂ preparation system, an inlet of the CO₂ booster (20) is connected to a gas in the CO₂ buffer device (16) through a third gas valve (17), and a pressurized hot fluid is connected to the plurality of pressure swing adsorption towers (13, 14) through valves to improve regeneration and desorption efficiency of the pressure swing adsorption towers, and the hot fluid is cooled and returned to the CO₂ evaporator (23) of the liquid CO₂ preparation system through an eighth gas valve (21) as a heat source. The fluid is then further cooled and sent to the CO₂ subcooler (46) for condensation and liquefaction. And then it is sent to a middle part of the CO₂ purification tower (22) for low-temperature separation to obtain the high-purity liquid CO₂ product at a bottom of the CO₂ evaporator (23).

In one embodiment, if a food-grade CO₂ product is required, a subsequent refining system can be set up to further remove other impurities in the liquid CO₂ product.

In one embodiment, a part of low-temperature fluid is drawn out from a middle and upper part of the nitrogen liquefier (33) of the high-purity liquid nitrogen preparation system and connected to a cold source inlet of the CO₂ subcooler (46) through a fourth gas valve (44) to serve as a cold source to condense and liquefy the CO₂ gas from the CO₂ evaporator (23); after heat exchange in the CO₂ subcooler (46), the low-temperature fluid is connected from a cold source outlet of the CO₂ subcooler (46) to an inlet of the blower (47) of the high-purity liquid nitrogen preparation system through a fifth gas valve (25), and returned to the high-purity liquid nitrogen preparation system for recycling.

In one embodiment, an external refrigerant circulation refrigeration system is provided, the external refrigerant circulation refrigeration system comprises a refrigerant compressor (26), a refrigerant cooler (27), a refrigerant heat regenerator (28) and a refrigerant throttle valve (29); a refrigerant outlet of the CO₂ condenser (24) is connected to the refrigerant heat regenerator (28), a refrigerant flowing out of the refrigerant outlet of the CO₂ condenser (24) is reheated by the refrigerant heat regenerator (28), pressurized by the refrigerant compressor (26), cooled by the refrigerant cooler (27), cooled by the refrigerant heat regenerator (28) and throttled by the refrigerant throttle valve (29), and then returns to a refrigerant inlet of the CO₂ condenser (24) to complete the refrigerant circulation refrigeration.

In one embodiment, in the high-purity liquid nitrogen preparation system, gas from the adsorption tail gas buffer device (19) is combined with gas from the outlet of the CO₂ subcooler (46) after boosted by the blower (47) through a sixth gas valve (30), and then connected to a hot-end of the nitrogen liquefier (33) through a seventh gas valve (48). It is cooled by the nitrogen liquefier (33), and then sent to the low-temperature separation system (42) for separation and purification to obtain high-purity nitrogen; meanwhile, a part of the fluid extracted from the middle and upper part of the nitrogen liquefier (33) is sent to the CO₂ subcooler (46) of the liquid CO₂ preparation system through the fourth gas valve (44) to serve as a cold source; the high-purity nitrogen from the low-temperature separation system (42) is connected to a cold-end inlet of the nitrogen liquefier (33), reheated by the nitrogen liquefier (33), and then connected to an inlet of the nitrogen booster (34); gas from an outlet of the nitrogen booster (34) is cooled by the nitrogen cooler (32) and enters the expansion cooling system (31) for pressurization and expansion, and is connected to the hot-end inlet of the nitrogen liquefier (33) to provide the cooling capacity required by the nitrogen liquefier (33); low-temperature high-pressure gas from the nitrogen liquefier (33) is connected to the gas-liquid separator (43) through a high-pressure throttle valve (45); gas at the top of the gas-liquid separator (43) is reheated by the nitrogen liquefier (33) and returned to the inlet of the nitrogen booster (34); liquid at the bottom outlet of the gas-liquid separator (43) is sent to the low-temperature separation system (42); low-pressure exhaust gas from the low-temperature separation system (42) is reheated by the nitrogen liquefier (33) and is connected to the inlet of the water cooling tower (3) in the flue gas boosting and cooling system through a ninth gas valve (55) to cool circulating water; the low-temperature separation system (42) sends out a subcooled high-purity liquid nitrogen product.

In one embodiment, the flue gas booster (1) is a multi-stage centrifugal compressor or blower, which can be designed and selected according to the impurity content in the flue gas.

In one embodiment, the flue gas cooling tower (2) and the water cooling tower (3) are both packed towers, which have the function of stabilizing pressure and buffering.

In one embodiment, the CO₂ buffer device (16) and the adsorption tail gas buffer device (19) are independently selected from an air bag or a buffer tank.

In one embodiment, the low-temperature separation system (42) is provided with one or more distillation towers, and a purity of the liquid nitrogen product produced can reach more than 99.999%.

In one embodiment, the system is provided with the flue gas cooling tower (2) and the water cooling tower (3), the flue gas cooling tower (2) is used to cool and dewater the flue gas, and can also remove some water-soluble impurities. The water cooling tower (3) utilizes the low-pressure nitrogen to reduce the water temperature, which discharged by the high-purity liquid nitrogen preparation system to recover the cooling capacity, thereby reducing the energy consumption for flue gas cooling. A bypass pipeline is provided in the middle of the flue gas cooling tower (2). When no nitrogen is introduced into the water cooling tower (3) during the shutdown of the high-purity liquid nitrogen preparation system, the purpose of lowering the flue gas temperature is achieved by circulating low-temperature water in the upper part of the flue gas cooling tower (2).

In one embodiment, the system adopts the adsorption method to realize the continuous separation and capture of CO₂ in the flue gas. The regeneration is carried out by means of reducing pressure and vacuuming, and the compression heat generated by the compressor is used as an auxiliary to increase the concentration content of CO₂ in the desorbed gas. The overall energy consumption is low. The number of adsorption towers can be designed according to the amount of flue gas to be treated, and the CO₂ content at the outlet of the desorbed gas can reach more than 95%.

In one embodiment, the system uses low-temperature separation technology to purify and liquefy CO₂. The cooling source of the CO₂ subcooler (46) comes from the high-temperature level cooling capacity of the high-purity liquid nitrogen preparation system, and is used to condense and liquefy the CO₂ gas cooled from the CO₂ evaporator (23), thereby improving separation efficiency and reducing separation energy consumption.

The present application provides a method for simultaneously producing high-purity liquid nitrogen and high-purity liquid carbon dioxide at low cost by using flue gas. The flue gas is processed in the system described in the above technical solution to obtain the liquid nitrogen product and the liquid carbon dioxide product. The specific steps preferably comprise:
Step 1: The flue gas at ambient temperature and atmospheric pressure is sent to the inlet of the flue gas booster (1) in the flue gas boosting and cooling system and is pressurized to 0.5MPa to 0.8MPa. The pressurized flue gas is sent to the flue gas cooling tower (2) for washing and cooling, and water-soluble impurities in the flue gas are removed simultaneously. Ambient temperature circulating water is used in the lower section of the flue gas cooling tower (2), and one part of the ambient temperature circulating water is pumped into the middle and lower part of the flue gas cooling tower (2) through the first water valve (6) and an ambient temperature water pump (35), and another part of the ambient temperature circulating water is pumped into the water cooling tower (3) through the second water valve (7). Low-temperature water is pumped into the upper part of the flue gas cooling tower through a third water valve (8) and the low-temperature water pump (4), which is cooled by the dry nitrogen discharged from the high-purity liquid nitrogen preparation system and chiller unit (5). During the shutdown of the high-purity liquid nitrogen preparation system, the fourth water valve (9) is opened to cool the flue gas by circulating the low-temperature water in the upper part. The sixth water valve (11) is provided at the bottom of the flue gas cooling tower (2), and the circulating water is discharged from the flue gas cooling tower (2) through the sixth water valve (11); the fifth water valve (10) is a water supply valve, which replenishes water carried away by the nitrogen gas to the system.
Step 2: The low-temperature flue gas at the outlet of the flue gas cooling tower (2) is connected to the inlets of the plurality of pressure swing adsorption towers (13, 14) in the CO₂/N₂ front-end separation system through the first gas valve (12), and the CO₂ in the flue gas is continuously adsorbed, captured and separated by the principle of the pressure swing adsorption. The number of the pressure swing adsorption towers can be designed according to the treatment amount and concentration of the flue gas, and the pressure swing adsorption towers that have been saturated with adsorption are regenerated by reducing pressure and vacuum desorption. The inlet of the vacuum pump (15) is connected to the plurality of pressure swing adsorption towers (13, 14). After the adsorption is completed, the pressure swing adsorption towers (13, 14) are desorbed and regenerated by pressure reduction and vacuuming by a vacuum pump (15). The outlet of the vacuum pump (15) is connected to a CO₂ buffer device (16). The concentrated CO₂ product gas after desorption is sent to the CO₂ buffer device (16). In order to improve the regeneration effect and increase the concentration content of CO₂, the hot fluid compressed by the CO₂ booster (20) is used to heat the pressure swing adsorption towers (13, 14) during desorption and regeneration. The cooled CO₂ fluid is returned to the liquid CO₂ preparation system. The gas that is not adsorbed by the pressure swing adsorption towers (13, 14) is sent as adsorption tail gas from the top of the pressure swing adsorption towers (13, 14) to the adsorption tail gas buffer device (19) through the second gas valve (18).
Step 3: The gas in the CO₂ buffer device (16) is connected to the inlet of the CO₂ booster (20) through the third gas valve (17). The pressurized hot fluid is connected to the pressure swing adsorption towers (13, 14) through the valves. The compression heat of the compressor is used to improve the regeneration and desorption efficiency of the pressure swing adsorption towers (13, 14). At the same time, the hot fluid is cooled and returned to the CO₂ evaporator (23) of the liquid CO₂ preparation system through the eighth gas valve (21) to serve as a heat source. The fluid is then further cooled and sent to the condenser in the CO₂ subcooler (46) for liquefaction. And then it is sent to a middle part of the CO₂ purification tower (22) for low-temperature separation to obtain the high-purity liquid CO₂ product at the bottom of the CO₂ evaporator (23), which is sent to the storage system. If food-grade CO₂ products are required, a subsequent refining system can be set up to further remove other impurities in the CO₂. At the same time, a part of the low-temperature fluid is drawn out from the middle and upper part of the nitrogen liquefier (33) of the high-purity liquid nitrogen preparation system and connected to the cold source inlet of the CO₂ subcooler (46) through the fourth gas valve (44) to serve as a cold source to condense and liquefy the CO₂ gas from the CO₂ evaporator (23). After heat exchange in the CO₂ subcooler (46), the low-temperature fluid is connected from the cold source outlet of the subcooler (46) to the inlet of the blower (47) of the high-purity liquid nitrogen preparation system through the fifth gas valve (25) and returned to the high-purity liquid nitrogen preparation system for recycling. At the same time, an external refrigerant circulation refrigeration system including a refrigerant compressor (26), a refrigerant cooler (27), a refrigerant heat regenerator (28) and a refrigerant throttle valve (29) is used to provide cooling capacity for the CO₂ condenser (24). The refrigerant outlet of the CO₂ condenser (24) is connected to the refrigerant heat regenerator (28). The refrigerant flowing out of the refrigerant outlet of the CO₂ condenser (24) is reheated by refrigerant heat regenerator (28), pressurized by the refrigerant compressor (26), cooled by the refrigerant cooler (27), cooled by the refrigerant heat regenerator (28), throttled by the refrigerant throttle valve (29), and then returns to the refrigerant inlet of CO₂ condenser (24) to complete the refrigerant circulation refrigeration.
Step 4: The gas from adsorption tail gas buffer device (19) is combined with the gas from the outlet of CO₂ subcooler (46) after boosted by the blower (47) through the sixth gas valve (30), and then connected to the hot-end inlet of nitrogen liquefier (33) through the seventh gas valve (48). It is cooled by the nitrogen liquefier (33), and then sent to the low-temperature separation system (42) for separation and purification to obtain high-purity nitrogen. At the same time, a part of the fluid extracted from the middle and upper part of nitrogen liquefier (33) is sent to the CO₂ subcooler (46) of the liquid CO₂ preparation system through the fourth gas valve (44) to serve as a cold source. The high-purity nitrogen from the low-temperature separation system (42) is connected to the cold-end inlet of the nitrogen liquefier (33), reheated by the nitrogen liquefier (33), and then connected to the inlet of the nitrogen booster (34). The gas from the outlet of the nitrogen booster (34) is cooled by the nitrogen cooler (32), and enters the expansion cooling system (31) for pressurization and expansion, and then connected to the hot-end inlet of the nitrogen liquefier (33) to provide the cooling capacity required by the nitrogen liquefier (33). The low-temperature high-pressure gas from the nitrogen liquefier (33) is connected to the gas-liquid separator (43) through the high-pressure throttle valve (45), the gas at the top of the gas-liquid separator (43) is reheated by the nitrogen liquefier (33) and returned to the inlet of the nitrogen booster (34), and the liquid at the bottom outlet of the gas-liquid separator (43) is sent to the low-temperature separation system (42); the low-pressure exhaust gas from the low-temperature separation system (42) is reheated by the nitrogen liquefier (33) and connected to the inlet of the water cooling tower (3) in the flue gas boosting and cooling system through the ninth gas valve (55) to cool the circulating water; the low-temperature separation system (42) sends out a subcooled high-purity liquid nitrogen product.

The present application provides a system and method for simultaneously producing high-purity liquid nitrogen and high-purity carbon dioxide at low cost by using flue gas, having the following beneficial effects.
1) The system and method utilize a combination of pressure swing adsorption and low-temperature separation technology to recover high-content carbon dioxide and nitrogen, which is the high-content components in the flue gas, into high-purity liquid carbon dioxide and high-purity liquid nitrogen products. By purifying, liquefying, and recovering the exhaust gas with a higher nitrogen content obtained by the CO₂/N₂ front-end separation system, nitrogen resources are reasonably utilized and the energy consumption of capturing low-concentration carbon dioxide in the flue gas is significantly reduced.
2) The system and method utilize the compression heat produced by the CO₂ booster to assist the desorption and regeneration of the adsorber, thereby increasing the carbon dioxide concentration in the desorbed gas and reducing the regeneration energy consumption.
3) The system and method extract a certain amount of high-temperature level cooling capacity from the high-purity liquid nitrogen preparation system for using in the subcooler of the liquid carbon dioxide preparation system to liquefy the raw CO₂ gas, thereby achieving the purpose of efficient separation and liquefaction of CO₂.
4) The high-purity liquid nitrogen preparation system of the system and method comprehensively utilizes the boosting power of the front-end raw material boosting system, eliminates the raw material nitrogen compressor, reduces equipment costs and reduces the energy consumption of liquid nitrogen production. The energy consumption of liquid nitrogen production in this method is 20% to 30% lower than the energy consumption of the conventional air extraction system.

### BRIEF DESCRIPTION OF THE DRAWINGS

In order to more clearly illustrate the technical solution in embodiments of the present application or the conventional technology, the following will briefly introduce drawings required for use in the embodiments or the conventional technology description. Apparently, the drawings described below are only embodiments of the present application. For those skilled in the art, other drawings can be obtained based on the provided drawings without creative work.
FIG 1 is a process flow framework diagram according to an embodiment of the present application.
FIG 2 is a process flow schematic diagram according to an embodiment of the present application.
FIG 3 is a process flow schematic diagram according to an embodiment of the present application.

**Description of reference numerals:**

| | | | |
|---|---|---|---|
| 1: | flue gas booster; | 2: | flue gas cooling tower; |
| 3: | water cooling tower; | 4: | low-temperature water pump; |
| 5: | chiller unit; | 6: | first water valve; |
| 7: | second water valve; | 8: | third water valve; |
| 9: | fourth water valve; | 10: | fifth water valve; |
| 11: | sixth water valve; | 12: | first gas valve; |
| 13, 14: | pressure swing adsorption tower; | 15: | vacuum pump; |
| 16: | CO₂ buffer device; | 17: | third gas valve; |
| 18: | second gas valve; | 19: | adsorption tail gas buffer device; |
| 20: | CO₂ booster; | 21: | eighth gas valve; |
| 22: | CO₂ purification tower; | 23: | CO₂ evaporator; |
| 24: | CO₂ condenser; | 25: | fifth gas valve; |
| 26: | refrigerant compressor; | 27: | refrigerant cooler; |
| 28: | refrigerant heat regenerator; | 29: | refrigerant throttle valve; |
| 30: | sixth gas valve; | 31: | expansion cooling system; |
| 32: | nitrogen cooler; | 33: | nitrogen liquefier; |
| 34: | nitrogen booster; | 35: | ambient temperature water pump; |
| 36: | boosting end of first gas expansion; | 37: | first gas expansion cooler; |
| 38: | boosting end of second gas expansion; | 39: | second gas expansion cooler; |
| 40: | expansion end of second gas expansion; | 41: | expansion end of first gas expansion; |
| 42: | low-temperature separation system; | 43: | gas-liquid separator; |
| 44: | fourth gas valve; | 45: | high-pressure throttle valve; |
| 46: | CO₂ subcooler; | 47: | blower; |
| 48: | seventh gas valve; | 49: | first nitrogen purification tower; |
| 50: | condenser of the first nitrogen purification tower; | 51: | second nitrogen purification tower; |
| 52: | condenser of the second nitrogen purification tower; | 53: | heat exchanger; |
| 54: | low-temperature circulation pump; | 55: | ninth gas valve. |

### DETAILED DESCRIPTION OF EMBODIMENTS

Hereinafter the technical solution in embodiments of the present application is clearly and completely described in conjunction with drawings in the embodiments of the present application. Apparently, the described embodiments are only part, not all of the embodiments of the present application. Based on the embodiments in the present application, all other embodiments obtained by those skilled in the art without creative work are within the scope of protection of the present application.

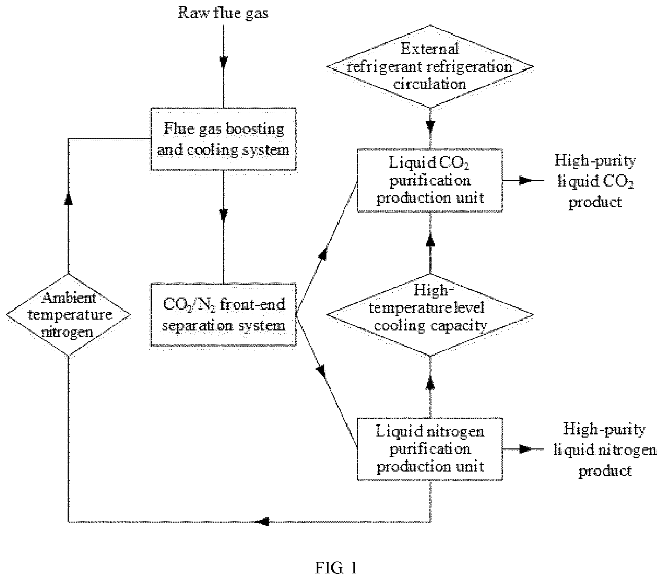

Reference is made to FIG 1. The system for simultaneously producing high-purity liquid nitrogen and liquid carbon dioxide at low cost by using flue gas comprises at least: flue gas boosting and cooling system, CO₂/N₂ front-end separation system, liquid CO₂ preparation system and high-purity liquid nitrogen preparation system. The system utilizes pressure swing adsorption technology and low-temperature separation technology, integrates the transfer and utilization of heating capacity and cooling capacity, and realizes the liquefaction and recovery of CO₂ and N₂ in flue gas.

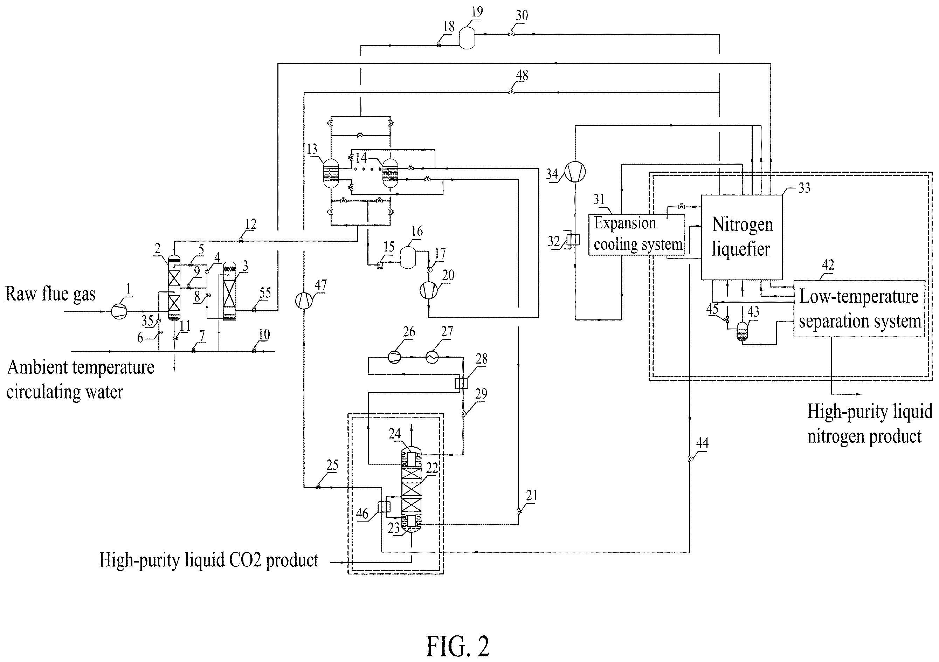

Reference is made to FIG 2. The flue gas boosting and cooling system comprises a flue gas booster (1), a flue gas cooling tower (2), a water cooling tower (3), a low-temperature water pump (4) and a chiller unit (5), configured to pressurize, cool, dewater and wash raw flue gas; the CO₂/N₂ front-end separation system is configured to separate CO₂ by using a pressure swing adsorption method, and comprises a plurality of pressure swing adsorption towers (13, 14), a switching flow path and a valve, a vacuum pump (15), a CO₂ buffer device (16) and an adsorption tail gas buffer device (19); when the system is in operation, the plurality of pressure swing adsorption towers (13, 14) are configured to adsorb CO₂ in the flue gas, and then the vacuum pump (15) depressurizes to desorb and obtain CO₂ product gas; the liquid CO₂ preparation system comprises a CO₂ booster (20), a CO₂ purification tower (22), a CO₂ condenser (24), a CO₂ evaporator (23) and a CO₂ subcooler (46), configured to further purify and liquefy the desorbed CO₂ product gas to obtain a liquid CO₂ product; the high-purity liquid nitrogen preparation system comprises a blower (47), a nitrogen booster (34), a nitrogen cooler (32), an expansion cooling system (31), a nitrogen liquefier (33), a gas-liquid separator (43) and a low-temperature separation system (42), configured to further purify and liquefy exhaust gas of the plurality of pressure swing adsorption towers (13, 14) to obtain a liquid nitrogen product; the flue gas boosting and cooling system, the CO₂/N₂ front-end separation system, the liquid CO₂ preparation system and the high-purity liquid nitrogen preparation system, as well as various devices and equipments in each system, are connected through pipelines and valves.

Reference is made to FIG 2. In the flue gas boosting and cooling system, the flue gas is pressurized to a required pressure by the flue gas booster (1), and the pressurized flue gas is sent to the flue gas cooling tower (2) for washing and cooling; the flue gas cooling tower (2) is structurally divided into two sections, and one part of ambient temperature circulating water is pumped into a middle and lower part of the flue gas cooling tower (2) through a first water valve (6), and another part of ambient temperature circulating water is pumped into the water cooling tower (3) through a second water valve (7); low-temperature water is pumped into an upper part of the flue gas cooling tower through a third water valve (8) and the low-temperature water pump (4), which is cooled by the dry nitrogen discharged from the high-purity liquid nitrogen preparation system and chiller unit (5). During the shutdown of the high-purity liquid nitrogen preparation system, a fourth water valve (9) is opened to cool the flue gas by circulating the low-temperature water in the upper part; the fifth water valve is a water supply valve (10), and the sixth water valve (11) is a drain valve.

Reference is made to FIG 2. In the CO₂/N₂ front-end separation system, inlets of the plurality of pressure swing adsorption towers (13, 14) are connected to the flue gas treated by the flue gas cooling tower (2) through a first gas valve (12) to continuously adsorb and capture CO₂ in the flue gas; an inlet of the vacuum pump (15) is connected to the plurality of pressure swing adsorption towers (13, 14), and after the adsorption is completed, the vacuum pump (15) is used to desorb and regenerate the plurality of pressure swing adsorption towers that have been saturated with adsorption; an outlet of the vacuum pump (15) is connected to the CO₂ buffer device (16), and desorbed gas is sent to the CO₂ buffer device (16); in order to improve the desorption and regeneration effect and the purity of the CO₂ product, the hot fluid compressed by the CO₂ booster (20) is used to heat the pressure swing adsorption towers (13, 14) that have been saturated with adsorption, and the cooled CO₂ fluid is returned to the liquid CO₂ preparation system; a gas that is not adsorbed by the plurality of pressure swing adsorption towers (13, 14) is sent to the adsorption tail gas buffer device (19) through a second gas valve (18) as an adsorption tail gas.

Reference is made to FIG 2. In the liquid CO₂ preparation system, an inlet of the CO₂ booster (20) is connected to a gas in the CO₂ buffer device (16) through a third gas valve (17), and a pressurized hot fluid is connected to the plurality of pressure swing adsorption towers (13, 14) through valves to improve regeneration and desorption efficiency of the pressure swing adsorption towers, and the hot fluid is cooled and returned to the CO₂ evaporator (23) of the liquid CO₂ preparation system through an eighth gas valve (21) as a heat source. The fluid is then further cooled and sent to the CO₂ subcooler (46) for condensation and liquefaction. And then it is sent to a middle part of the CO₂ purification tower (22) for low-temperature separation to obtain the high-purity liquid CO₂ product at a bottom of the CO₂ evaporator (23); if a food-grade CO₂ product is required, a subsequent refining system can be set up to further remove other impurities in the liquid CO₂ product.

Reference is made to FIG 2. A part of low-temperature fluid is drawn out from a middle and upper part of the nitrogen liquefier (33) of the high-purity liquid nitrogen preparation system and connected to a cold source inlet of the CO₂ subcooler (46) through a fourth gas valve (44) to serve as a cold source to condense and liquefy the CO₂ gas from the CO₂ evaporator (23); after heat exchange in the CO₂ subcooler (46), the low-temperature fluid is connected from a cold source outlet of the CO₂ subcooler (46) to an inlet of the blower (47) of the high-purity liquid nitrogen preparation system through a fifth gas valve (25), and returned to the high-purity liquid nitrogen preparation system for recycling.

Reference is made to FIG 2. An external refrigerant circulation refrigeration system is provided, the external refrigerant circulation refrigeration system comprises a refrigerant compressor (26), a refrigerant cooler (27), a refrigerant heat regenerator (28) and a refrigerant throttle valve (29); a refrigerant outlet of the CO₂ condenser (24) is connected to the refrigerant heat regenerator (28), a refrigerant flowing out of the refrigerant outlet of the CO₂ condenser (24) is reheated by the refrigerant heat regenerator (28), pressurized by the refrigerant compressor (26), cooled by the refrigerant cooler (27), cooled by the refrigerant heat regenerator (28) and throttled by the refrigerant throttle valve (29), and then returns to a refrigerant inlet of the CO₂ condenser (24) to complete the refrigerant circulation refrigeration.

Reference is made to FIG 2. In the high-purity liquid nitrogen preparation system, gas from the adsorption tail gas buffer device (19) is combined with gas from the outlet of the CO₂ subcooler (46) after boosted by the blower (47) through the sixth gas valve (30), and then connected to a hot-end inlet of the nitrogen liquefier (33) through a seventh gas valve (48), cooled by the nitrogen liquefier (33), and then sent to the low-temperature separation system (42) for separation and purification to obtain high-purity nitrogen; meanwhile, a part of the fluid extracted from the middle and upper part of the nitrogen liquefier (33) is sent to the CO₂ subcooler (46) of the liquid CO₂ preparation system through the fourth gas valve (44) to serve as a cold source; the high-purity nitrogen from the low-temperature separation system (42) is connected to a cold-end inlet of the nitrogen liquefier (33), reheated by the nitrogen liquefier (33), and then connected to an inlet of the nitrogen booster (34); gas from an outlet of the nitrogen booster (34) is cooled by the nitrogen cooler (32) and enters the expansion cooling system (31) for pressurization and expansion, and is connected to the hot-end inlet of the nitrogen liquefier (33) to provide the cooling capacity required by the nitrogen liquefier (33); low-temperature high-pressure gas from the nitrogen liquefier (33) is connected to the gas-liquid separator (43) through a high-pressure throttle valve (45); gas at the top of the gas-liquid separator (43) is reheated by the nitrogen liquefier (33) and returned to the inlet of the nitrogen booster (34); liquid at the bottom outlet of the gas-liquid separator (43) is sent to the low-temperature separation system (42); low-pressure exhaust gas from the low-temperature separation system (42) is reheated by the nitrogen liquefier (33) and is connected to the inlet of the water cooling tower (3) in the flue gas boosting and cooling system through the ninth gas valve (55) to cool circulating water; the low-temperature separation system (42) sends out a subcooled high-purity liquid nitrogen product.

In the system provided by the present application, the flue gas booster (1) is a multi-stage centrifugal compressor or blower, which can be designed and selected according to the impurity content in the flue gas.

In the system provided by the present application, the specific number of the plurality of pressure swing adsorption towers (13, 14) can be designed and selected according to the flue gas treatment capacity and the impurity content in the flue gas.

In the system provided by the present application, the high-purity liquid nitrogen preparation system provides cooling capacity for the flue gas boosting and cooling system and the liquid CO₂ preparation system, and provides matching cooling capacity according to the temperature requirements of each system, so as to achieve efficient utilization of the cooling capacity in the system and optimize the overall energy consumption.

In the system provided by the present application, the liquid CO₂ preparation system can obtain industrial-grade liquid CO₂, and a refining system can also be provided to produce food-grade liquid CO₂.

In the system provided by the present application, the low-temperature separation system (42) in the high-purity liquid nitrogen preparation system can adopt a single nitrogen tower single condenser purification process, or a double nitrogen tower with double condenser purification process.

In the present application, the specific steps of simultaneously producing high-purity liquid nitrogen and high-purity liquid carbon dioxide at low cost using the flue gas in the system as shown in FIG 2 are as follows.

Step 1: The raw flue gas enters the inlet of the flue gas booster (1) in the flue gas boosting and cooling system. The pressurized flue gas is sent to the flue gas cooling tower (2) for washing and cooling, and water-soluble impurities in the flue gas are removed simultaneously. Ambient temperature circulating water is used in the lower section of the flue gas cooling tower (2), and one part of the ambient temperature circulating water is pumped into the middle and lower part of the flue gas cooling tower (2) through the first water valve (6) and an ambient temperature water pump (35), and another part of the ambient temperature circulating water is pumped into the water cooling tower (3) through the second water valve (7). Low-temperature water is pumped into the upper part of the flue gas cooling tower through a third water valve (8) and the low-temperature water pump (4), which is cooled by the dry nitrogen discharged from the high-purity liquid nitrogen preparation system and chiller unit (5). Dry nitrogen discharged from the high-purity liquid nitrogen preparation system and low-temperature water cooled by the chiller unit (5) are pumped into the upper part of the flue gas cooling tower (2) through the third water valve (8) and the low-temperature water pump (4). During the shutdown of the high-purity liquid nitrogen preparation system, the fourth water valve (9) is opened to cool the flue gas by circulating the low-temperature water in the upper part. The sixth water valve (11) is provided at the bottom of the flue gas cooling tower (2), and the circulating water is discharged from the flue gas cooling tower (2) through the sixth water valve (11); the fifth water valve (10) is a water supply valve, which replenishes water carried away by the nitrogen gas to the system.

Step 2: The low-temperature flue gas at the outlet of the flue gas cooling tower (2) is connected to the inlets of the plurality of pressure swing adsorption towers (13, 14) in the CO₂/N₂ front-end separation system through the first gas valve (12), and the CO₂ in the flue gas is continuously adsorbed, captured and separated by the principle of the pressure swing adsorption. The number of the pressure swing adsorption towers can be designed according to the treatment amount and concentration of the flue gas, and the pressure swing adsorption towers that have been saturated with adsorption are regenerated by reducing pressure and vacuum desorption. The inlet of the vacuum pump (15) is connected to the plurality of pressure swing adsorption towers (13, 14). After the adsorption is completed, the pressure swing adsorption towers (13, 14) are desorbed and regenerated by pressure reduction and vacuuming by a vacuum pump (15). The outlet of the vacuum pump (15) is connected to a CO₂ buffer device (16). The concentrated CO₂ product gas (the purity is preferably not less than 95%) after desorption is sent to the CO₂ buffer device (16). In order to improve the regeneration effect and increase the concentration content of CO₂, the hot fluid compressed by the CO₂ booster (20) is used to heat the pressure swing adsorption towers (13, 14) during desorption and regeneration. The cooled CO₂ fluid is returned to the liquid CO₂ preparation system. The gas that is not adsorbed by the pressure swing adsorption towers (13, 14) is sent as adsorption tail gas (a nitrogen content is preferably about 90%) from the top of the pressure swing adsorption towers (13, 14) to the adsorption tail gas buffer device (19) through the second gas valve (18).

Step 3: The gas in the CO₂ buffer device (16) is connected to the inlet of the CO₂ booster (20) through the third gas valve (17). The pressurized hot fluid is connected to the pressure swing adsorption towers (13, 14) through the valves. The compression heat of the compressor is used to improve the regeneration and desorption efficiency of the pressure swing adsorption towers (13, 14). At the same time, the hot fluid is cooled and returned to the CO₂ evaporator (23) of the liquid CO₂ preparation system through the eighth gas valve (21) to serve as a heat source. The fluid is then further cooled, and sent to the condenser in the CO₂ subcooler (46) for liquefaction. And then it is sent to the middle part of the CO₂ purification tower (22) for low-temperature separation to obtain the high-purity liquid CO₂ product (the purity is preferably > 99.9%) at the bottom of the CO₂ evaporator (23), which is sent to the storage system. If food-grade CO₂ products are required, a subsequent refining system can be set up to further remove other impurities in the CO₂. At the same time, a part of the low-temperature fluid is drawn out from the middle and upper part of the nitrogen liquefier (33) of the high-purity liquid nitrogen preparation system and connected to the cold source inlet of the CO₂ subcooler (46) through the fourth gas valve (44) to serve as a cold source to condense and liquefy the CO₂ gas from the CO₂ evaporator (23). After heat exchange in the CO₂ subcooler (46), the low-temperature fluid is connected from the cold source outlet of the subcooler (46) to the inlet of the blower (47) of the high-purity liquid nitrogen preparation system through the fifth gas valve (25) and returned to the high-purity liquid nitrogen preparation system for recycling. At the same time, an external refrigerant circulation refrigeration system including a refrigerant compressor (26), a refrigerant cooler (27), a refrigerant heat regenerator (28) and a refrigerant throttle valve (29) is used to provide cooling capacity for the CO₂ condenser (24). The refrigerant outlet of the CO₂ condenser (24) is connected to the refrigerant heat regenerator (28). The refrigerant flowing out of the refrigerant outlet of the CO₂ condenser (24) is reheated by refrigerant heat regenerator (28), pressurized by the refrigerant compressor (26), cooled by the refrigerant cooler (27), cooled by the refrigerant heat regenerator (28), throttled by the refrigerant throttle valve (29), and then returns to the refrigerant inlet of CO₂ condenser (24) to complete the refrigerant circulation refrigeration. The refrigerant is preferably an environmentally friendly refrigerant.

Step 4: The gas from adsorption tail gas buffer device (19) is combined with the gas from the outlet of CO₂ subcooler (46) after boosted by the blower (47) through the sixth gas valve (30), and then connected to the hot-end inlet of nitrogen liquefier (33) through the seventh gas valve (48). It is cooled by the nitrogen liquefier (33), and then sent to the low-temperature separation system (42) for separation and purification to obtain high-purity nitrogen. At the same time, a part of the fluid extracted from the middle and upper part of nitrogen liquefier (33) is sent to the CO₂ subcooler (46) of the liquid CO₂ preparation system through the fourth gas valve (44) to serve as a cold source. The high-purity nitrogen from the low-temperature separation system (42) is connected to the cold-end inlet of the nitrogen liquefier (33), reheated by the nitrogen liquefier (33), and then connected to the inlet of the nitrogen booster (34). The gas from the outlet of the nitrogen booster (34) is cooled by the nitrogen cooler (32), and enters the expansion cooling system (31) for pressurization and expansion, and then connected to the hot-end inlet of the nitrogen liquefier (33) to provide the cooling capacity required by the nitrogen liquefier (33). The low-temperature high-pressure gas from the nitrogen liquefier (33) is connected to the gas-liquid separator (43) through the high-pressure throttle valve (45), the gas at the top of the gas-liquid separator (43) is reheated by the nitrogen liquefier (33) and returned to the inlet of the nitrogen booster (34), and the liquid at the bottom outlet of the gas-liquid separator (43) is sent to the low-temperature separation system (42); the low-pressure exhaust gas from the low-temperature separation system (42) is reheated by the nitrogen liquefier (33) and connected to the inlet of the water cooling tower (3) in the flue gas boosting and cooling system through the ninth gas valve (55) to cool the circulating water; the low-temperature separation system (42) sends out a super-cooled high-purity liquid nitrogen product (the purity is preferably >99.999%).

For the purpose of clarity, the present application is described in detail through the following examples.

### Example 1

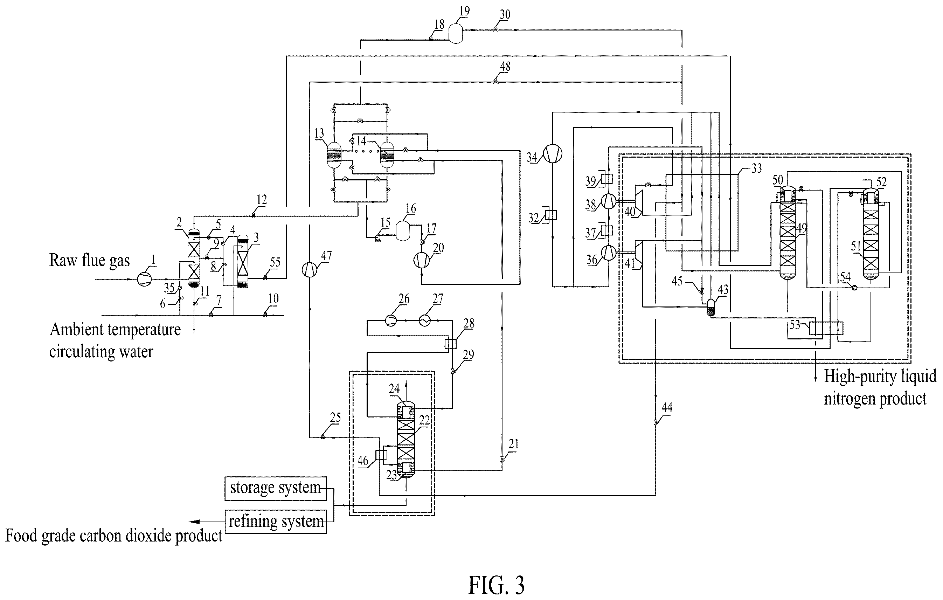

The specific process of simultaneously producing high-purity liquid nitrogen and high-purity liquid carbon dioxide at low cost by using the flue gas in the system shown in FIG 3 is as follows:

The raw flue gas (at a temperature of about 50°C, a pressure of about 0.1MPa, a flow rate of about 65000Nm³/h, a molar composition of about 12% CO₂, 73%N₂, 8%H₂O, 6%O₂, 0.984%Ar, 100ppm CO, 50ppm NO₂, 10ppm SO₂) was sent to the inlet of the flue gas booster (1) in the flue gas boosting and cooling system, and pressurized to 0.57MPa. The pressurized flue gas was sent to the flue gas cooling tower (2) for washing and cooling to about 12°C, and water-soluble impurities in the flue gas were removed simultaneously. Ambient temperature circulating water (about 32°C) was used in the lower section of the flue gas cooling tower (2), and one part of the ambient temperature circulating water was pumped into the middle and lower part of the flue gas cooling tower (2) through the first water valve (6) and the ambient temperature water pump (35), and another part of the ambient temperature circulating water was pumped into the water cooling tower (3) through the second water valve (7). Low-temperature water was pumped into the upper part of the flue gas cooling tower through a third water valve (8) and the low-temperature water pump (4), which was cooled by the dry nitrogen discharged from the high-purity liquid nitrogen preparation system and chiller unit (5). Dry nitrogen discharged from the high-purity liquid nitrogen preparation system and low-temperature water cooled by the chiller unit (5) were pumped into the upper part of the flue gas cooling tower (2) through the third water valve (8) and the low-temperature water pump (4). During the shutdown of the high-purity liquid nitrogen preparation system, the fourth water valve (9) was opened to cool the flue gas by circulating the low-temperature water in the upper part. The sixth water valve (11) was provided at the bottom of the flue gas cooling tower (2), and the circulating water was discharged from the flue gas cooling tower (2) through the sixth water valve (11); the fifth water valve (10) was a water supply valve that replenished water carried away by the nitrogen gas to the system.

The low-temperature flue gas at the outlet of the flue gas cooling tower (2) was connected to the inlets of the plurality of pressure swing adsorption towers (13, 14) in the CO₂/N₂ front-end separation system through the first gas valve (12), and the CO₂ in the flue gas was continuously adsorbed, captured and separated. The adsorber that has been saturated with adsorption was regenerated by reducing pressure and vacuum desorption. The inlet of the vacuum pump (15) was connected to the plurality of pressure swing adsorption towers (13, 14). After the adsorption was completed, the pressure swing adsorption towers (13, 14) were vacuumed to less than 10 kPa by the vacuum pump (15) to achieve desorption and regeneration of the adsorption tower. The outlet of the vacuum pump (15) was connected to the CO₂ buffer device (16). After desorption, the CO₂ product gas with a purity of not less than 95% was sent to the CO₂ buffer device (16). The hot fluid compressed by the CO₂ booster (20) was used to heat the regenerating pressure swing adsorption towers (13, 14), and the cooled CO₂ fluid was returned to the liquid CO₂ preparation system. The gas not adsorbed by the adsorber was sent as the adsorption tail gas (nitrogen content is about 90%) from the top of the pressure swing adsorption towers (13, 14) to the adsorption tail gas buffer device (19) through the second gas valve (18).

The gas (at a flow rate of about 8000Nm³/h) in the CO₂ buffer device (16) was connected to the inlet of the CO₂ booster (20) through the third gas valve (17), and the pressurized hot fluid (about 2.4MPaA) was connected to the pressure swing adsorption towers (13, 14) through the valves. The compression heat of the compressor was used to improve the regeneration and desorption efficiency of the pressure swing adsorption towers (13, 14). At the same time, the hot fluid was cooled and returned to the CO₂ evaporator (23) of the liquid CO₂ preparation system through the eighth gas valve (21) to serve as a heat source. The fluid is then further cooled, and sent to the CO₂ subcooler (46) for condensation and liquefaction (about -16°C). And then it was sent to the middle part of the CO₂ purification tower (22) for low-temperature separation, to obtain the high-purity liquid CO₂ product with a purity of more than 99.9% at the bottom of the CO₂ evaporator (23), which was sent to the storage system. If food-grade CO₂ products were required, a subsequent refining system could be set up to further remove other impurities in the CO₂. At the same time, a part of the fluid (about -30°C) was drawn out from the middle and upper part of the nitrogen liquefier (33) of the high-purity liquid nitrogen preparation system and connected to the cold source inlet of the CO₂ subcooler (46) through the fourth gas valve (44). After heat exchange in the CO₂ subcooler (46), the fluid was connected from the cold source outlet of the CO₂ subcooler (46) to the inlet of the blower (47) of the high-purity liquid nitrogen preparation system through the fifth gas valve (25). After being pressurized by the blower (47), the fluid was returned to the high-purity liquid nitrogen preparation system for recycling. At the same time, an external refrigerant circulation refrigeration system including a refrigerant compressor (26), a refrigerant cooler (27), a refrigerant heat regenerator (28) and a refrigerant throttle valve (29) was provided. An environmentally friendly refrigerant R507 was compressed to about 1.8 MPa by the refrigerant compressor (26), cooled to about 37°C after heat exchange with water in the refrigerant cooler (27), cooled to below 8°C after heat exchange with the gas coming out of the evaporator in the refrigerant heat regenerator (28), throttled by the refrigerant throttle valve (29), and entered the CO₂ condenser (24) of the CO₂ purification tower (22) to absorb heat and evaporate. The rising gas at the top of the tower was condensed in the CO₂ condenser (24). After evaporation, the refrigerant was connected to the refrigerant heat regenerator (28) through the refrigerant outlet of the CO₂ condenser (24), and was reheated by the refrigerant heat regenerator (28), pressurized by the refrigerant compressor (26), cooled by the refrigerant cooler (27), cooled by the refrigerant heat regenerator (28), and throttled by the refrigerant throttle valve (29) and then returned to the refrigerant inlet of CO₂ condenser (24), to complete the refrigerant circulation refrigeration system and provide cooling capacity for the condenser of the CO₂ purification tower.

The gas (a flow rate of about 51,000 Nm³/h, a pressure of about 0.5 MPa) from the adsorption tail gas buffer device (19) was combined with the gas (a flow rate of about 10,000 Nm³/h) from the outlet of the CO₂ subcooler (46) of the liquid CO₂ preparation system after boosted by the blower (47) through the sixth gas valve (30), and then connected to the first inlet of the nitrogen liquefier (33) through the seventh gas valve (48). About 51,000 Nm³/h of the gas was connected to the low-temperature separation system (42) through the first outlet of the nitrogen liquefier (33), cooled to about -178°C by the nitrogen liquefier (33) and then sent to the first nitrogen purification tower (49) for separation and purification. At the same time, about 10,000 Nm³/h of fluid was extracted from the flow path and sent to the CO₂ subcooler (46) of the liquid CO₂ preparation system through the second outlet (about -30°C) of the nitrogen liquefier (33) and the fourth gas valve (44) to serve as a cold source. A high-purity nitrogen (a purity was > 99.999%) was obtained at the top of the first nitrogen purification tower (49), and the high-purity nitrogen was connected to the second inlet of the nitrogen liquefier (33), and reheated to about 37°C by the nitrogen liquefier (33), then connected to the inlet of the nitrogen booster (34) through the second outlet of the nitrogen liquefier (33). The first outlet (about 3.0MPaA, 40°C, 65000Nm³/h) of the nitrogen booster (34) was connected to the third inlet of the nitrogen liquefier (33), and the high-purity nitrogen was cooled to about 9°C by the nitrogen liquefier (33), and connected from the third outlet of the nitrogen liquefier (33) to the inlet of the expansion end of second gas expansion (40) to serve as an expansion gas source to expand and provide cooling capacity. The expanded gas was connected to the fourth inlet of the nitrogen liquefier (33), and reheated to about 37°C by the nitrogen liquefier (33), then returned to the inlet of the nitrogen booster (34) through the fourth outlet. The second outlet (about 3.0 MPaA, 40°C, 110,000 Nm³/h) of the nitrogen booster (34) was connected to the inlet of the boosting end of first gas expansion (36), and the gas was pressurized to about 6.9 MPa at a temperature of 40°C through the boosting end of first gas expansion (36), the first gas expansion cooler (37), the boosting end of second gas expansion (38), and the second gas expansion cooler (39) in sequence, and then connected to the fifth inlet of the nitrogen liquefier (33); a part of the gas was connected to the inlet of the expansion end of first gas expansion (41) through the fifth outlet (about 79,000 Nm³/h, -90°C) of the nitrogen liquefier (33) to serve as an expansion gas source to expand and provide cooling capacity. The expanded gas was connected to the first inlet of the gas-liquid separator (43); a part of the gas passed through the sixth outlet of the nitrogen liquefier (33) and was connected to the second inlet of the gas-liquid separator (43) through the high-pressure throttle valve (45). The first outlet of the gas-liquid separator (43) was connected to the sixth inlet of the nitrogen liquefier (33). The gas was reheated in the nitrogen liquefier (33), and then returned to the inlet of the nitrogen booster (34) through the seventh outlet of the nitrogen liquefier (33). The second outlet of gas-liquid separator (43) outputed a high-purity liquid nitrogen product that was sent to the heat exchanger (53). The high-purity liquid nitrogen was cooled in the heat exchanger (53) and then output as a product. In order to improve the low-temperature separation efficiency, the separation system of this example adopted a double-tower double-condenser process. The liquid air obtained at the bottom of the first nitrogen purification tower was supercooled to about -180°C by the heat exchanger (53) and throttled to about 2.92MPaA and then sent to the condenser of the first nitrogen purification tower (50) as a cold source to cool the rising gas at the top of the first nitrogen purification tower. After absorbing heat and evaporating in the condenser of the first nitrogen purification tower (50), the gas was sent to the second nitrogen purification tower (51) for further separation and purification, and high-purity liquid nitrogen was obtained at the top of the second nitrogen purification tower (51), the high-purity liquid nitrogen was pressurized to about 0.8MPa by a low-temperature circulation pump (54) and then pumped back to the top of the first nitrogen purification tower. The liquid air obtained at the bottom of the second nitrogen purification tower was supercooled to about -185°C by a heat exchanger (53), and throttled to about 1.3MPa and then sent to the condenser of the second nitrogen purification tower (52) as a cold source to cool the rising gas at the top of the first nitrogen purification tower. The waste gas obtained after absorbing heat and evaporating in the condenser of the second nitrogen purification tower (52) was reheated by a heat exchanger (53) and then connected to the seventh inlet of the nitrogen liquefier (33), and reheated to about 37°C by the nitrogen liquefier (33), then connected to the inlet of the water cooling tower (3) in the boosting and cooling system through the eighth outlet and the ninth gas valve (55) for cooling the circulating water.

In this example, the purity of the obtained high-purity liquid nitrogen product is greater than 99.999%.

The above is only a preferred example of the present application. It should be pointed out that for those skilled in the art, several improvements and modifications can be made without departing from the principle of the present application. These improvements and modifications should also be regarded as the scope of protection of the present application.

## Claims

1. A system for simultaneously producing high-purity liquid nitrogen and high-purity liquid carbon dioxide at low cost by using flue gas, comprising: a flue gas boosting and cooling system, a CO₂/N₂ front-end separation system, a liquid CO₂ preparation system and a high-purity liquid nitrogen preparation system;
wherein the flue gas boosting and cooling system comprises a flue gas booster (1), a flue gas cooling tower (2), a water cooling tower (3), a low-temperature water pump (4) and a chiller unit (5), configured to pressurize, cool, dewater and wash raw flue gas;
the CO₂/N₂ front-end separation system is configured to separate CO₂ by using a pressure swing adsorption method, and comprises a plurality of pressure swing adsorption towers (13, 14), a switching flow path and a valve, a vacuum pump (15), a CO₂ buffer device (16) and an adsorption tail gas buffer device (19); when the system is in operation, the plurality of pressure swing adsorption towers (13, 14) are configured to adsorb CO₂ in the flue gas, and then the vacuum pump (15) depressurizes to desorb and obtain a CO₂ product gas;
the liquid CO₂ preparation system comprises a CO₂ booster (20), a CO₂ purification tower (22), a CO₂ condenser (24), a CO₂ evaporator (23) and a CO₂ subcooler (46), configured to further purify and liquefy the desorbed CO₂ product gas to obtain a high-purity liquid CO₂ product;
the high-purity liquid nitrogen preparation system comprises a blower (47), a nitrogen booster (34), a nitrogen cooler (32), an expansion cooling system (31), a nitrogen liquefier (33), a gas-liquid separator (43) and a low-temperature separation system (42), configured to further purify and liquefy exhaust gas of the plurality of pressure swing adsorption towers (13, 14) to obtain a liquid nitrogen product;
when the system is in operation, compression heat generated by compressing CO₂ in the liquid CO₂ preparation system is used to assist the operation of the plurality of pressure swing adsorption towers (13, 14); a part of fluid produced by the nitrogen liquefier (33) of the high-purity liquid nitrogen preparation system is drawn out to be used as a cold source for the liquid CO₂ preparation system; dry exhaust gas produced by the high-purity liquid nitrogen preparation system is used in the water cooling tower (3) of the flue gas boosting and cooling system to recover cooling capacity;
the flue gas boosting and cooling system, the CO₂/N₂ front-end separation system, the liquid CO₂ preparation system and the high-purity liquid nitrogen preparation system, as well as various devices and equipments in each system, are connected through pipelines and valves.

2. The system for simultaneously producing high-purity liquid nitrogen and high-purity liquid carbon dioxide at low cost by using flue gas according to claim 1, wherein in the flue gas boosting and cooling system, the flue gas is pressurized to a required pressure by the flue gas booster (1), and the pressurized flue gas is sent to the flue gas cooling tower (2) for washing and cooling; the flue gas cooling tower (2) is structurally divided into two sections, and one part of ambient temperature circulating water is pumped into a middle and lower part of the flue gas cooling tower (2) through a first water valve (6), and another part of ambient temperature circulating water is pumped into the water cooling tower (3) through a second water valve (7); low-temperature water is pumped into an upper part of the flue gas cooling tower through a third water valve (8) and the low-temperature water pump (4), which is cooled by the dry nitrogen discharged from the high-purity liquid nitrogen preparation system and chiller unit (5); during the shutdown of the high-purity liquid nitrogen preparation system, a fourth water valve (9) is opened to cool the flue gas by circulating the low-temperature water in the upper part.

3. The system for simultaneously producing high-purity liquid nitrogen and high-purity liquid carbon dioxide at low cost by using flue gas according to claim 1, wherein in the CO₂/N₂ front-end separation system, inlets of the plurality of pressure swing adsorption towers (13, 14) are connected to the flue gas treated by the flue gas cooling tower (2) through a first gas valve (12) to continuously adsorb and capture CO₂ in the flue gas; an inlet of the vacuum pump (15) is connected to the plurality of pressure swing adsorption towers (13, 14), and after the adsorption is completed, the vacuum pump (15) is used to desorb and regenerate the pressure swing adsorption towers that have been saturated with adsorption; an outlet of the vacuum pump (15) is connected to the CO₂ buffer device (16), and desorbed gas is sent to the CO₂ buffer device (16); a gas that is not adsorbed by the plurality of pressure swing adsorption towers (13, 14) is sent to the adsorption tail gas buffer device (19) through a second gas valve (18) as an adsorption tail gas.

4. The system for simultaneously producing high-purity liquid nitrogen and high-purity liquid carbon dioxide at low cost by using flue gas according to claim 1, wherein in the liquid CO₂ preparation system, an inlet of the CO₂ booster (20) is connected to a gas in the CO₂ buffer device (16) through a third gas valve (17), and a pressurized hot fluid is connected to the plurality of pressure swing adsorption towers (13, 14) through valves to improve regeneration and desorption efficiency of the pressure swing adsorption towers, and the hot fluid is cooled and returned to the CO₂ evaporator (23) of the liquid CO₂ preparation system through an eighth gas valve (21) as a heat source, the fluid is then further cooled and sent to the CO₂ subcooler (46) for condensation and liquefaction, and then it is sent to a middle part of the CO₂ purification tower (22) for low-temperature separation to obtain the high-purity liquid CO₂ product at a bottom of the CO₂ evaporator (23).

5. The system for simultaneously producing high-purity liquid nitrogen and high-purity liquid carbon dioxide at low cost by using flue gas according to claim 1, wherein a part of low-temperature fluid is drawn out from a middle and upper part of the nitrogen liquefier (33) of the high-purity liquid nitrogen preparation system and connected to a cold source inlet of the CO₂ subcooler (46) through a fourth gas valve (44) to serve as a cold source to condense and liquefy the CO₂ gas from the CO₂ evaporator (23); after heat exchange in the CO₂ subcooler (46), the low-temperature fluid is connected from a cold source outlet of the CO₂ subcooler (46) to an inlet of the blower (47) of the high-purity liquid nitrogen preparation system through a fifth gas valve (25), and returned to the high-purity liquid nitrogen preparation system for recycling.

6. The system for simultaneously producing high-purity liquid nitrogen and high-purity liquid carbon dioxide at low cost by using flue gas according to claim 1, further comprising an external refrigerant circulation refrigeration system, wherein the external refrigerant circulation refrigeration system comprises a refrigerant compressor (26), a refrigerant cooler (27), a refrigerant heat regenerator (28) and a refrigerant throttle valve (29); a refrigerant outlet of the CO₂ condenser (24) is connected to the refrigerant heat regenerator (28), a refrigerant flowing out of the refrigerant outlet of the CO₂ condenser (24) is reheated by the refrigerant heat regenerator (28), pressurized by the refrigerant compressor (26), cooled by the refrigerant cooler (27), cooled by the refrigerant heat regenerator (28) and throttled by the refrigerant throttle valve (29), and then returns to a refrigerant inlet of the CO₂ condenser (24) to complete the refrigerant circulation refrigeration.

7. The system for simultaneously producing high-purity liquid nitrogen and high-purity liquid carbon dioxide at low cost by using flue gas according to claim 1, wherein in the high-purity liquid nitrogen preparation system, gas from the adsorption tail gas buffer device (19) is combined with gas from the outlet of the CO₂ subcooler (46) after boosted by the blower (47) through a sixth gas valve (30), and then connected to a hot-end inlet of the nitrogen liquefier (33) through a seventh gas valve (48), it is cooled by the nitrogen liquefier (33), and then sent to the low-temperature separation system (42) for separation and purification to obtain high-purity nitrogen; meanwhile, a part of the fluid extracted from the middle and upper part of the nitrogen liquefier (33) is sent to the CO₂ subcooler (46) of the liquid CO₂ preparation system through the fourth gas valve (44) to serve as a cold source; the high-purity nitrogen from the low-temperature separation system (42) is connected to a cold-end inlet of the nitrogen liquefier (33), reheated by the nitrogen liquefier (33), and then connected to an inlet of the nitrogen booster (34); gas from an outlet of the nitrogen booster (34) is cooled by the nitrogen cooler (32) and enters the expansion cooling system (31) for pressurization and expansion, and is connected to the hot-end inlet of the nitrogen liquefier (33) to provide the cooling capacity required by the nitrogen liquefier (33); low-temperature high-pressure gas from the nitrogen liquefier (33) is connected to the gas-liquid separator (43) through a high-pressure throttle valve (45); gas at the top of the gas-liquid separator (43) is reheated by the nitrogen liquefier (33) and returned to the inlet of the nitrogen booster (34); liquid at the bottom outlet of the gas-liquid separator (43) is sent to the low-temperature separation system (42); low-pressure exhaust gas from the low-temperature separation system (42) is reheated by the nitrogen liquefier (33) and is connected to the inlet of the water cooling tower (3) in the flue gas boosting and cooling system through a ninth gas valve (55) to cool circulating water; the low-temperature separation system (42) sends out a subcooled high-purity liquid nitrogen product.

8. The system for simultaneously producing high-purity liquid nitrogen and high-purity liquid carbon dioxide at low cost by using flue gas according to claim 1, wherein the flue gas booster (1) is a multi-stage centrifugal compressor or blower.

9. The system for simultaneously producing high-purity liquid nitrogen and high-purity liquid carbon dioxide at low cost by using flue gas according to claim 1, wherein the CO₂ buffer device (16) and the adsorption tail gas buffer device (19) are separately selected as an air bag or a buffer tank.

10. A method for simultaneously producing high-purity liquid nitrogen and high-purity liquid carbon dioxide at low cost by using flue gas, wherein the flue gas is treated in the system for simultaneously producing high-purity liquid nitrogen and high-purity liquid carbon dioxide at low cost by using flue gas according to any one of claims 1-9, to obtain the liquid nitrogen product and the liquid carbon dioxide product.
